# FASCICULE DE BREVET EUROPEEN

(11) **EP 0 908 232 B1**
(45) Date de publication et mention de la délivrance du brevet: **18.12.2002**
(21) Numéro de dépôt: 98402486.9
(22) Date de dépôt: 07.10.1998
(51) Int. Cl.: B01J 27/053, B01J 21/06

(54) **Catalyseur acide à base de zircone sulfatée et ses utilisations**
Sulfatierte Zirconoxid haltende sauer Katalysator und Verwendungen derselben
Sulfated zirconia containing acid catalyst and use thereof

(30) Priorité: 13.10.1997 FR 9712762
(43) Date de publication de la demande: 14.04.1999
(73) Titulaire: TOTAL RAFFINAGE DISTRIBUTION S.A., 92800 Puteaux (FR)
(72) Inventeur: Szabo, Georges, 76290 Montivilliers (FR); Nascimento, Pedro, 76620 Le Havre (FR); Milan, Alain, 79290 Montivilliers (FR); Decker, Sébastien, 76600 Le Havre (FR)
(74) Mandataire: Jolly, Jean-Pierre

(56) Documents cités:
- EP-A- 0 504 741
- EP-A- 0 520 543
- US-A- 5 113 034
- US-A- 5 191 139

## Description

La présente invention concerne un catalyseur acide contenant une quantité substantielle de zircone sulfatée et au moins un métal de transition hydrogénant, ainsi que ses utilisations dans des réactions chimiques de transformation des hydrocarbures nécessitant l'emploi d'un catalyseur de type acide, telles que par exemple des réactions d'isomérisation, d'alkylation, d'oligomérisation ou encore de déshydratation d'hydrocarbures légers, mais également des réactions d'hydrocraquage ou d'hydroisomérisation d'hydrocarbures plus lourds.

Dans ce qui suit, le terme « zircone sulfatée » désigne non pas du sulfate de zirconium ou de zirconyle stoechiométrique, mais de la zircone (dioxyde de zirconium) plus ou moins sulfatée, dont la teneur en sulfate peut être inférieure à celle des composés stoechiométriques cités ci-avant.

De manière connue en soi, l'industrie pétrolière a recours à de nombreux procédés permettant de modifier les structures des hydrocarbures, afin d'obtenir des molécules dont les propriétés conviennent à l'usage recherché. Ces procédés font généralement appel à un ou plusieurs catalyseurs, lesquels doivent être spécifiquement adaptés à la transformation chimique que l'on souhaite effectuer, ainsi qu'aux exigences liées à la mise en oeuvre du procédé.

Bon nombre de ces réactions chimiques de transformation des hydrocarbures se font en présence d'un catalyseur de type acide. C'est le cas, par exemple, des réactions intervenant dans le procédé d'isomérisation des paraffines, lequel s'applique essentiellement aux essences légères et permet de transformer les paraffines linéaires en paraffines ramifiées, dont l'indice d'octane est plus élevé.

Dans ce procédé, les catalyseurs acides les plus employés à l'heure actuelle sont des catalyseurs à base de chlorure d'aluminium supporté sur alumine (c'est à dire déposé sur support d'alumine). Ces catalyseurs, extrêmement actifs, permettent en effet de réaliser la réaction d'isomérisation à basse température, vers 150°C, avec un équilibre thermodynamique très favorable à la formation des produits recherchés.

Cependant, ce type de catalyseur présente un certain nombre d'inconvénients liés notamment à la fragilité de ses sites actifs. En effet, le chlorure d'aluminium est un composé extrêmement instable: il est détruit de manière irréversible par l'eau, l'oxygène, les composés oxygénés ou soufrés. Ces produits doivent donc être intégralement éliminés de la charge à traiter, ce qui s'avère relativement contraignant et coûteux. De plus, le chargement des réacteurs, lors du démarrage de l'unité ou en cas de remplacement du catalyseur, doit être effectué dans des conditions parfaitement anhydres, sans trace d'eau ni d'oxygène. Par ailleurs, la préservation des sites actifs en cours de fonctionnement nécessite l'injection permanente de dopes telles que l'acide chlorhydrique ou d'autres produits chlorés; un excès d'acide doit alors être éliminé en sortie du réacteur et pose inévitablement des problèmes de corrosion. Enfin, malgré toutes les précautions prises, le catalyseur se détruit progressivement et il doit être remplacé périodiquement, puisqu'il n'est pas régénérable.

C'est pourquoi la recherche en matière de catalyseurs acides s'est orientée vers l'élaboration de nouvelles compositions ayant des propriétés catalytiques similaires à celles du chlorure d'aluminium, mais ne présentant pas les inconvénients de ce dernier. C'est en particulier le cas de la zircone sulfatée.

Ainsi, le brevet US 3032599 (Phillips Petroleum) est l'un des premiers brevets à décrire l'application de la zircone sulfatée à l'isomérisation et l'alkylation d'hydrocarbures : les catalyseurs proposés sont entièrement réalisés à partir de gel de zircone, contenant éventuellement de faibles quantités d'un promoteur métallique. Ils sont préparés par précipitation d'un sel de zirconyle en solution dans l'eau, par addition de base. Le gel de zircone obtenu est alors sulfaté, puis activé à 500°C environ. Ces catalyseurs présentent effectivement des propriétés catalytiques acides, mais ils sont néanmoins peu satisfaisants. Ils ont en effet une surface spécifique peu élevée, ce qui peut expliquer leurs performances relativement médiocres pour les réactions d'isomérisation. De plus, ces catalyseurs pulvérulents sont quasiment inutilisables tels quels dans un réacteur industriel.

Par ailleurs, le brevet US 3132110 (Union Oil) décrit les propriétés d'une série de catalyseurs acides à base de zircone hydratée contenant des radicaux sulfate, pure ou de préférence combinée à de l'alumine. Les méthodes de préparation de ces catalyseurs reposent essentiellement sur la décomposition d'un sel de sulfate de zirconium en solution dans l'eau, par hydrolyse en milieu basique ou par décomposition thermique. Les catalyseurs ainsi obtenus sont effectivement actifs dans bon nombre de réactions nécessitant l'emploi d'un catalyseur acide, et présentent l'avantage d'être parfaitement régénérables. Néanmoins, leur activité s'est avérée être relativement limitée et ces catalyeurs doivent être utilisés à des températures élevées, par exemple supérieures à 370°C dans le cas de la réaction d'isomérisation des paraffines. Or, à de telles températures, non seulement cette réaction est thermodynamiquement défavorisée, mais de plus on accélère la vitesse de désactivation du catalyseur par dépôt de coke à sa surface.

Dans la même optique de remplacement, en isomérisation, des catalyseurs à base de chlorure d'aluminium par des compositions catalytiques plus stables, le brevet US 4406821 (Exxon) propose un catalyseur constitué d'un oxyde sulfaté déposé sur un support d'alumine, ledit oxyde étant préférentiellement de l'oxyde de tungstène ou d'hafnium, mais pouvant également être de l'oxyde de niobium, de thallium, de zirconium ou un mélange de ces oxydes. Ce catalyseur est préparé par imprégnation du support d'alumine avec une solution d'un sel du métal choisi, suivie d'une calcination à haute température puis d'une sulfatation au moyen d'une solution aqueuse d'acide sulfurique. Le catalyseur ainsi obtenu possède effectivement des propriétés acides, et il est particulièrement performant dans les réctions d'éthérification des phénols. Cependant, ces catalyseurs sont peu adaptés à la réaction d'isomérisation des paraffines à basse température, pour laquelle ils semblent présenter une activité limitée.

D'une manière générale, les catalyseurs acides proposés dans l'art antérieur et susceptibles de remplacer les catalyseurs d'isomérisation à base d'alumine chlorée sont donc assez peu satisfaisants, du fait de leur faible activité.

Poursuivant ses recherches dans le domaine des catalyseurs à base de zircone sulfatée, la Demanderesse a émis l'hypothèse que le manque d'activité des formules proposées jusqu'ici était lié à la structure même de ces catalyseurs, qui ne présentent pas suffisamment de sites actifs accessibles aux molécules réactives. Elle en a déduit que cela était dû à une porosité inadaptée ainsi qu'à une surface spécifique trop faible des catalyseurs de l'art antérieur, dans l'incapacité dans laquelle on était de maîtriser ces paramètres.

C'est pourquoi la Demanderesse a fait porter ses travaux sur le problème, alors irrésolu, de l'amélioration des échanges entre sites actifs du catalyseur et molécules à convertir. Elle a supposé qu'il était nécessaire de parvenir à modifier la structure de ces catalyseurs à base de zircone sulfatée, et elle s'est ainsi attachée à élaborer des catalyseurs présentant une porosité et une surface spécifique plus adéquates, propres à leur conférer une activité supérieure par rapport à ce qui était réalisé jusqu'ici. Ce faisant, elle a également découvert un certain nombre de méthodes originales permettant de contrôler la porosité de ces catalyseurs et de les façonner de manière à obtenir les structures actives désirées.

Ainsi, la Demanderesse a mis au point un catalyseur acide solide, contenant une quantité substantielle de zircone sulfatée supportée ou massique, au moins un autre oxyde minéral réfractaire, et au moins un métal de transition hydrogénant. Ce catalyseur se caractérise en ce que ladite zircone sulfatée est sous forme cristallisée et en ce qu'il présente une surface spécifique supérieure ou égale à 135 m²/g, un volume de pores supérieur ou égal à 0,16 cm³/g et un rayon de pores moyen supérieur ou égal à 20 Å (20.10⁻¹⁰m).

Ici et dans ce qui suit, les caractéristiques de surface spécifique, de volume de pores et de rayon de pores moyen sont citées en référence à la méthode de détermination dite B.E.T. (Brunauer, Emmett, Teller) par adsorption d'azote, bien connue de l'homme du métier, telle qu'elle est décrite dans l'ouvrage de S. Lowell et J.E. Shields, "Powder Surface Area and Porosityll, Powder Technology Series (1984). La surface spécifique S est déduite de la transformée linéaire B.E.T. à cinq points, le volume de pores Vp est déterminé d'après la quantité d'azote adsorbé à pression relative P/Po = 0,985 et le rayon de pores moyen Rp est calculé par la formule Rp = 2Vp/S.

Dans le catalyseur conforme à la présente invention, la zircone (dioxyde de zirconium) est partiellement ou totalement sulfatée. Avantageusement, la teneur en sulfate est inférieure aux quantités stoechiométriques : la teneur en soufre sous forme de sulfate est préférentiellement comprise entre 1% et 10% en poids par rapport au poids de zircone, et plus préférentiellement entre 1% et 5% en poids.

Les caractéristiques de structure et de texture définissant les catalyseurs selon l'invention ont été optimisées en agissant sur le mode de fabrication de ces catalyseurs : en recourant à des moyens adéquats tels que le dépôt de zircone sulfatée sur un support approprié ou l'utilisation éventuelle d'un agent structurant, en agissant tant sur la nature que sur l'ordre des étapes de fabrication de ces catalyseurs, en mettant en oeuvre des traitements thermiques appropriés (calcinations notamment), il a été possible de modifier la structure et la texture des catalyseurs à base de zircone sulfatée afin de sélectionner les formules les plus actives.

Comparé aux catalyseurs à base de zircone sulfatée connus jusqu'ici, le catalyseur selon l'invention présente une structure cristalline contribuant à lui conférer une porosité plus ouverte, et une surface spécifique plus élevée. Ceci a pour conséquence une meilleure facilité d'accès des réactifs à des sites actifs qui sont eux-mêmes plus nombreux, ce qui, in fine, confère à ce catalyseur une activité accrue : pour la réaction d'isomérisation des paraffines linéaires, il s'est avéré posséder une activité proche de celle des catalyseurs traditionnels à base d'alumine chlorée. Comme ces derniers, le catalyseur selon l'invention demeure actif à basse température (vers 150°C), c'est-à-dire dans des conditions pour lesquelles la réaction d'isomérisation des paraffines linéaires est thermodynamiquement favorable aux produits ramifiés recherchés.

De plus, bien qu'ayant des propriétés catalytiques similaires aux catalyseurs traditionnels à base de chlorure d'aluminium, le catalyseur selon l'invention n'en présente pas les inconvénients: beaucoup plus stable, ce dernier s'avère en effet moins sensible à l'inévitable présence de faibles quantités d'eau et de composés soufrés dans les charges à convertir. En effet, l'eau agit sur les sites actifs du catalyseur de manière non pas destructrice mais inhibitrice, et ce de façon réversible, puisque ce catalyseur peut être facilement régénéré. De même, le stockage et le chargement de ce catalyseur ne nécessitent aucune précaution particulière.

Par ailleurs, le catalyseur selon l'invention présente l'avantage indéniable d'être parfaitement régénérable, par combustion des dépôts de coke formés pendant la réaction d'isomérisation. Cette propriété est particulièrement intéressante d'un point de vue économique, étant donné le coût élevé des catalyseurs. La régénération peut avantageusement se faire in situ, c'est à dire sans avoir à sortir le catalyseur du réacteur, ce qui permet d'éviter la multiplication des opérations de déchargement et de chargement de ce dernier.

Il devient alors possible d'envisager des procédés avec régénération en continu du catalyseur, ce dernier circulant entre un réacteur dans lequel s'effectue la conversion et une enceinte de régénération du catalyseur. Un tel procédé permet d'éviter d'avoir à arrêter régulièrement l'unité pour régénérer le catalyseur, et surtout de disposer dans le réacteur d'un catalyseur maintenu en permanence au maximum de son activité.

De plus, l'utilisation du catalyseur selon l'invention ne nécessite pas d'injecter dans le réacteur des dopes corrosives. Il en résulte une diminution des phénomènes de corrosion à l'intérieur de l'unité, et donc une durée de vie allongée pour cette dernière. Il s'ensuit également une amélioration de la sécurité liée au procédé, et notamment une diminution des risques de pollution et d'accident liés à l'emploi de telles dopes, particulièrement nocives.

Enfin, le catalyseur selon l'invention s'est avéré remarquablement actif dans un certain nombre de réactions autres que l'isomérisation des paraffines légères. Citons, entre autres, les réactions d'alkylation, les réactions de déshydratation, et surtout les réactions d'hydrocraquage et d'hydroisomérisation de paraffines linéaires plus longues (comportant plus de 7 atomes de carbone)

Parallèlement, la Demanderesse a mis au point plusieurs méthodes originales permettant de maîtriser la structure et la texture des catalyseurs à base de zircone sulfatée, et de préparer ainsi un catalyseur à porosité contrôlée tel que décrit ci-avant. L'invention concerne donc également ces procédés de préparation, lesquels seront exposés plus en détail dans la description et les exemples qui suivent.

Pour que le catalyseur soit suffisamment actif, la zircone sulfatée qu'il contient doit se présenter sous forme cristallisée, c'est à dire qu'elle ne doit pas être sous forme amorphe. Les structures cristallines préférées sont les structures de type quadratique et monoclinique. La détermination de la structure cristalline de la zircone est réalisée, de manière bien connue, par diffraction des rayons X.

La présence d'un métal de transition hydrogénant est nécessaire à la stabilité de l'activité catalytique du catalyseur selon l'invention. Ce métal de transition hydrogénant est de préférence un élément du groupe VIII de la Classification Périodique des Eléments, et notamment un élément du groupe constitué par le platine, le ruthénium, le rhodium, le palladium, l'osmium et l'iridium, le platine étant particulièrement préféré. La structure cristalline de la zircone n'est pas affectée de manière sensible par la présence de ce métal de transition hydrogénant.

Le catalyseur acide selon l'invention est de type solide. Il pourra se présenter sous toutes les formes auxquelles l'homme du métier recourt habituellement pour la mise en oeuvre de catalyseurs solides, et notamment sous la forme de particules telles que des billes, des extrudés, des pastilles. Il a une densité apparente de remplissage de préférence comprise entre 0,5 et 3.

Préférentiellement, sa surface spécifique est supérieure ou égale à 150 m²/g, son volume de pores supérieur ou égal à 0,2 cm³/g et son rayon de pores moyen supérieur ou égal à 30 Å (30.10⁻¹⁰m).

La zircone sulfatée cristallisée présente dans le catalyseur selon l'invention peut se présenter sous deux formes distinctes: une forme dite « supportée », ou une forme dite « massique ».

Dans le cas d'un catalyseur à base de zircone sulfatée cristallisée sous forme supportée, les cristaux de zircone sulfatée sont déposés sur un support qui a déjà été mis en forme. Ce dernier peut être tout type de support usuellement employé pour les catalyseurs industriels, comme par exemple les alumines, les silices, les silice-alumines, les silicalites, les alumino-silicates, les magnésies, les zéolithes, les charbons actifs, les oxydes de gallium, de titane, de thorium, de bore, les argiles et tout mélange de ces supports. Le catalyseur selon l'invention comprend alors de préférence entre 50% et 95% en poids de support classique, sur lequel est déposé de 5% à 50% en poids de zircone sulfatée.

Dans le cas d'un catalyseur à base de zircone sulfatée cristallisée sous forme massique, ledit catalyseur comprend des cristaux de zircone dans sa matrice, seuls ou en mélange avec un agent structurant, lequel permet de mieux contrôler la structure et la texture du catalyseur, et de faciliter sa mise en forme, compte tenu du caractère pulvérulent de la zircone. Cet agent structurant peut être tout oxyde minéral réfractaire habituellement employé dans l'industrie, et peut avantageusement être choisi dans le groupe constitué par les alumines, les silices, les silice-alumines, les alumino-silicates, les argiles et les mélanges de ces composés. Le catalyseur peut alors comprendre de 0,5% à 100% en poids de zircone sulfatée, et préférentiellement de 20% à 80% en poids.

Le catalyseur acide selon l'invention peut être préparé suivant un certain nombre de procédés détaillés ci-après. Ces procédés permettent d'accéder à une maîtrise rigoureuse des propriétés structurales et texturales du catalyseur, ce qui est indispensable si l'on veut préparer un catalyseur répondant aux caractéristiques de l'invention, à savoir un catalyseur hautement actif et utilisable tel quel dans un réacteur industriel.

### a) Catalyseur à base de zircone sulfatée supportée

Le catalyseur acide solide, à base de zircone sulfatée déposée sur un support catalytique, peut être préparé suivant un procédé comprenant les étapes suivantes :
- dépôt de zircone hydratée sur le support catalytique,
- calcination du solide,
- sulfatation du solide,
- dépôt d'un métal de transition hydrogénant,
- calcination finale du solide.

L'étape de dépôt de zircone hydratée sur le support catalytique peut être effectuée par imprégnation dudit support au moyen d'une solution d'un sel de zirconium suivie de séchage du solide ainsi obtenu.

L'étape de dépôt d'un métal de transition hydrogénant sur le support catalytique peut être effectuée avant le dépôt de zircone ou à un autre moment de la préparation, mais avant la calcination finale.

### b) Catalyseur à base de zircone sulfatée massique

Dans ces catalyseurs, la matrice est à base de zircone, pure ou en mélange avec un agent structurant constitué d'un oxyde minéral réfractaire ou d'un mélange d'oxydes minéraux réfractaires.

Le catalyseur acide solide, à base de zircone sulfatée massique en mélange avec un oxyde minéral réfractaire structurant, peut être préparé suivant un procédé comprenant les étapes suivantes :
- addition d'une solution basique à une solution d'un sel de zirconium, de manière à provoquer une précipitation de zircone hydratée,
- addition d'une solution d'un sel précurseur de l'oxyde minéral réfractaire structurant,
- addition d'une solution basique, de manière à provoquer une précipitation de l'oxyde minéral réfractaire structurant,
- lavage puis séchage du produit obtenu,
- mise en forme du solide,
- sulfatation du solide,
- dépôt du métal de transition hydrogénant,
- calcination finale.

La précipitation de la zircone peut être effectuée avant ou après celle de l'agent structurant. Les étapes de dépôt du métal de transition hydrogénant et de mise en forme peuvent être effectuées avant ou après la sulfatation, mais avant la calcination finale.

Suivant une première variante, le catalyseur acide solide, à base de zircone sulfatée massique en mélange avec un oxyde minéral réfractaire structurant, peut être préparé suivant un autre procédé comprenant les étapes suivantes:
- addition d'une solution basique à une solution d'un sel de zirconium et d'un sel précurseur de l'oxyde minéral réfractaire structurant, de manière à provoquer une coprécipitation de zircone et de l'oxyde minéral réfractaire structurant,
- lavage, séchage du précipité obtenu,
- mise en forme du solide,
- sulfatation du solide,
- dépôt du métal de transition hydrogénant,
- calcination finale.

Les étapes de dépôt du métal de transition hydrogénant et de mise en forme peuvent être effectuées avant ou après la sulfatation, mais avant la calcination finale.

Enfin, le catalyseur acide solide, à base de zircone sulfatée massique pure peut être préparé suivant un procédé comprenant les étapes suivantes :
- addition d'une solution basique à une solution d'un sel de zirconium, de manière à provoquer une précipitation de zircone hydratée,
- lavage puis séchage du précipité obtenu,
- sulfatation du solide,
- mise en forme du solide,
- dépôt du métal de transition hydrogénant,
- calcination finale.

Les étapes de dépôt du métal de transition hydrogénant et de mise en forme peuvent être effectuées avant ou après la sulfatation, mais avant la calcination finale.

Quels que soient le type de catalyseur élaboré et le procédé de préparation mis en oeuvre à cet effet:
- le sel de zirconium peut être choisi dans le groupe constitué par les nitrate, chlorure, acétate, formiate, oxalate de zirconium et de zirconyle ainsi que les propylate et butylate de zirconium;
- les sels pouvant être utilisés comme précurseurs de l'oxyde minéral réfractaire structurant, le cas échéant, sont bien connus de l'homme du métier. Si ledit oxyde minéral est, par exemple, de l'alumine, on emploiera un sel d'aluminium pouvant avantageusement être choisi dans le groupe constitué par les nitrate, chlorure et sulfate d'aluminium;
- la solution basique employée peut être toute solution permettant de réaliser la précipitation d'un oxyde hydraté à partir d'une solution d'un sel précurseur dudit oxyde par augmentation du pH. Il pourra s'agir par exemple d'une solution d'ammoniaque ou de toute autre base connue de l'homme du métier;
- l'étape de sulfatation du catalyseur est réalisée par imprégnation du solide au moyen d'un agent sulfatant, puis séchage. L'agent sulfatant peut être liquide, gazeux ou en solution; on peut employer par exemple de l'acide sulfurique pur ou en solution, une solution aqueuse de sulfate d'ammonium, ou tout autre précurseur d'ions sulfate. Pour réaliser cette sulfatation, on peut faire appel à toute technique d'imprégnation connue de l'homme de l'art. Cette étape se termine généralement par une calcination du solide sulfaté;
- l'étape de mise en forme du catalyseur solide selon l'invention, nécessaire lorsque celui-ci contient de la zircone massique, permet d'agglomérer la poudre de catalyseur sous forme de particules (billes, extrudés ou pastilles par exemple), afin de permettre l'utilisation directe de ce catalyseur dans un réacteur industriel. Pour faciliter cette opération, il peut être nécessaire d'ajouter à la poudre de catalyseur un liant (xérogel d'alumine ou tout autre liant industriel), puis de malaxer le mélange ainsi obtenu, avant de procéder à la mise en forme proprement dite par extrusion, « oil drop », méthode du drageoir ou toute autre méthode connue pour la mise en forme des catalyseurs industriels. Cette étape s'achève par une calcination;
- l'étape de dépôt du métal de transition hydrogénant est réalisée par imprégnation du solide au moyen d'une solution d'un composé de ce métal de transition hydrogénant, suivie d'une étape de séchage; quand ce métal est le platine, l'étape d'imprégnation est effectuée au moyen d'une solution d'un composé du platine pouvant être choisi dans le groupe constitué par l'acide chloroplatinique et les composés complexes du platine;
- la première calcination, généralement effectuée après la mise en forme, doit avoir lieu à une température suffisamment élevée, à savoir supérieure ou égale à 550°C. Ceci est nécessaire à l'obtention d'une zircone présentant une structure cristalline adéquate.

Les procédés de préparation décrits ci-avant ne sont que des suggestions pour la préparation d'un catalyseur conforme à l'invention. Bien entendu, celles-ci n'ont pas de caractère limitatif. L'homme du métier saura parfaitement, si nécessaire, les adapter par d'autres opérations supplémentaires bien connues, telles que par exemple des étapes de mûrissement des gels, des lavages aux solvants, des séchages, des calcinations.

Le catalyseur acide selon l'invention peut être utilisé dans toute réaction chimique de transformation des hydrocarbures nécessitant l'emploi d'un catalyseur acide, voire superacide.

Ce catalyseur s'est avéré particulièrement avantageux pour les réactions d'isomération des paraffines linéaires en paraffines ramifiées à température inférieure à 200°C, mais il peut tout aussi bien être employé en isomérisation d'oléfines, isomérisation de composés cycliques et aromatiques. Il peut également être utilisé dans une réaction d'alkylation, une réaction d'oligomérisation ou une réaction de déshydratation d'hydrocarbures.

Il peut par ailleurs être employé, de manière particulièrement avantageuse, dans un procédé de traitement d'une coupe hydrocarbonée contenant une quantité substantielle de paraffines à longue chaîne, linéaires ou peu ramifiées, telles que par exemple des paraffines issues d'une synthèse du type Fischer-Tropsch (synthèse d'hydrocarbures à partir du mélange C0+H₂). La transformation de ces paraffines par hydrocraquage ou par hydroisomérisation est souvent nécessaire afin d'obtenir soit des « grands » produits (essences, naphta, distillats moyens), soit des spécialités (paraffines, lubrifiants haut de gamme). Les conditions opératoires doivent alors être ajustées en fonction de la réaction que l'on souhaite favoriser (hydrocraquage ou hydroisomérisation), et du niveau de conversion souhaité. Elles seront avantageusement les suivantes :une température comprise entre 20°C et 200°C (de préférence entre 50°C et 150°C), une pression comprise entre 5.10⁵ et 100.10⁵ Pa (de préférence entre 20.10⁵ et 60.10⁵Pa), un rapport moléculaire hydrogène/hydrocarbures à convertir H₂/HC compris entre 1 et 20 (de préférence entre 5 et 15).

Le catalyseur selon l'invention peut être stocké ou chargé dans un réacteur sans précautions particulières. Il est toutefois préférable de le soumettre à une calcination à haute température en atmosphère sèche, avant de le mettre en oeuvre.

Après utilisation, il peut être régénéré tout simplement par passage dans une atmosphère oxydante à une température de l'ordre de 400 à 700°C.

Les exemples suivants sont destinés à illustrer l'invention. Ils n'ont aucun caractère limitatif.

### Exemples :

### Préparation d'échantillons de catalyseur selon l'invention :

### Catalyseur A

Cet exemple illustre la préparation d'un catalyseur acide A selon l'invention, à base de zircone sulfatée supportée.

L'échantillon de catalyseur est préparé à partir de 25g de support d'alumine, commercialisée par AKZO sous l'appelation CK 300, préalablement calcinée à 600°C.

Le dépôt de zirconium est effectué dans un ballon, en imprégnant le support par une solution constituée par la dissolution de 3,48 g de chlorure de zirconyle (ZrOCl₂, 8 H₂O, commercialisé par Prolabo) et 0,46 g de NH₄Cl dans 11 cm³ d'eau distillée, volume correspondant au volume poreux du support.

Le solide obtenu est d'abord séché à 120°C pendant une nuit, puis calciné à 600°C pendant 2 heures.

Cette opération est répété deux fois (dépôt de zirconium en trois fois), puis le solide obtenu est calciné à 750°C pendant 4 heures.

Puis on effectue la sulfatation du zirconium déposé sur la surface du support d'alumine par circulation de 162 cm³ d'une solution d'acide sulfurique 5 N à la température ambiante pendant 1 heure.

Puis on essore et on sèche le solide à 120°C durant une nuit et on le calcine durant 2 heures à 500°C sous un débit d'air sec de 60 l.h⁻¹.

Enfin, on procède au dépôt de 0,5% en poids de platine: on mélange 15 cm³ de solution d'acide chloroplatinique à 10 g.l⁻¹ à 85 cm³ d'eau distillée; on mélange cette solution au solide préparé ci-avant, puis on évapore l'eau.

Le solide ainsi obtenu est séché à 120°C durant une nuit et calciné pendant 4 heures, sous un débit de 45 l.h⁻¹ d'air sec à 500°C.

### Catalyseur B

Cet exemple illustre la préparation d'un catalyseur acide B selon l'invention, à base de zircone sulfatée massique, en mélange avec un oxyde minéral réfractaire structurant, ici de l'alumine.

On prépare une solution de Zr en dissolvant 23,93 g de ZrO(NO₃)₂, 6H₂O dans 239 ml d'eau distillée sous agitation.

On précipite le gel de zircone hydratée sous forte agitation par addition de 11 ml d'une solution d'ammoniaque à 28%, toujours sous agitation. Le pH final est de 8.

On prépare une solution d'aluminium en dissolvant 16,55 g d'Al(NO₃)₃, 9H₂O dans 50 ml d'eau.

On verse cette solution sur le gel de zircone sous forte agitation, puis on ajoute 8,5 ml d'ammoniaque à 28%.

Après filtration et lavage jusqu'à pH 7 (redispersion dans 300 ml d'eau), on sèche le gel pendant une nuit à 120°C.

La mise en forme est réalisée après broyage et malaxage avec 3,17 g d'alumine commercialisée par CONDEA sous l'appelation Pural SB (soit 20% de xérogel) et 9 ml d'eau distillée dans une seringue-extrudeuse (2 mm de diamètre).

Après séchage pendant une nuit à 120°C, on calcine les extrudés à 750°C pendant 4 heures.

On procède à la sulfatation de 13,17 g de solide en ajoutant 81 ml d'acide sulfurique 5 N, par circulation pendant 1 heure. On procède à l'essorage ensuite sur Buchner, puis au rinçage et séchage pendant une nuit à 120°C. On termine par une calcination à 500°C pendant 2 heures.

La quantité de matière récupérée est de 14,5 g.

On procède finalement au dépôt de platine sur 10,74 g de solide en imprégnant à l'évaporateur rotatif au moyen d'une solution constituée du mélange de 5,37 ml d'une solution d'acide chloroplatinique à 10 g/l de Pt et de 40 ml d'eau.

Le solide est finalement séché à 120°C pendant une nuit et calciné ensuite à 480°C pendant 4 heures.

### Catalyseur C

Cet exemple illustre une variante pour la préparation d'un catalyseur acide C selon l'invention, à base de zircone sulfatée massique en mélange avec un oxyde minéral réfractaire structurant, ici de l'alumine.

On prépare un gel en dispersant 20 g d'alumine Pural SB dans 240 ml d'eau sous forte agitation.

On prépare ensuite une solution de Zr en dissolvant 34,55 g de ZrO(NO₃)₂, 6H₂O dans 350 ml d'eau distillée, sous agitation.

On ajoute la dernière solution sur le gel sous forte agitation et on provoque la précipitation de zircone hydratée par addition supplémentaire de 16,25 ml d'une solution d'ammoniaque à 28%, toujours sous agitation. Le pH final est de 8,5.

Après filtration lente et lavage jusqu'à pH 7 (redispersion dans 400 ml d'eau), on sèche le gel pendant une nuit à 120°C.

La mise en forme est réalisée après -broyage et malaxage de 16,1 g de solide avec 4,03 g d'alumine type Pural SB (soit 20 % de xérogel) et 11,5 ml d'eau distillée dans une seringue-extrudeuse (2 mm de diamètre).

Après séchage pendant une nuit à 120°C, on calcine les extrudés à 750°C pendant 4 heures.

On procède à la sulfatation de 14,25 g de solide en ajoutant 81 ml d'acide sulfurique 5 N par circulation pendant 1 heure. On procède à l'essorage ensuite sur Buchner, puis au rinçage et au séchage pendant une nuit à 120°C. On termine par une calcination à 500°C pendant 2 heures.

On procède finalement au dépôt de platine en imprégnant à l'évaporateur rotatif 14,5 g de ce solide par une solution constituée par le mélange de 7,25 ml d'une solution d'acide chloroplatinique à 10 g/l de Pt et 30 ml d'eau.

Le solide est finalement séché à 120°C pendant une nuit et calcine ensuite à 480°C pendant 4 heures.

### Catalyseur D

Cet exemple illustre une autre variante pour la préparation d'un catalyseur acide D selon l'invention, à base de zircone sulfatée massique en mélange avec un oxyde minéral réfractaire structurant, ici de l'alumine.

On dissout 21,11g de ZrO(NO₃)₂, 6H₂O et 27,58 g d'Al(NO₃)₃, 9H₂O dans 400 ml d'eau distillée sous agitation (soit 75% de ZrO₂ et 25% de Al₂O₃ pour 15 g de catalyseur).

On précipite le cogel d'hydroxyde par addition de 28,2 ml d'une solution d'ammoniaque à 28%, toujours sous agitation. Le pH final est de 9.

Après filtration et lavage jusqu'à pH 7 (redispersion dans 400 ml d'eau), on sèche le gel pendant une nuit à 120°C.

La mise en forme est réalisée après broyage de l'ensemble du solide et malaxage avec 3,33 g d'alumine type Pural SB (soit 20% de xérogel) et 8,75 ml d'eau distillée dans une seringue-extrudeuse (2mm de diamètre).

Après séchage pendant une nuit à 120°C, on calcine les extrudés à 750°C pendant 4 heures.

On procède à la sulfatation de 11,13 g de solide en ajoutant 75 ml d'acide sulfurique 5 N, par circulation pendant 1 heure. On procède à l'essorage ensuite sur Buchner, puis au rinçage et au séchage pendant une nuit à 120°C. On termine par une calcination à 500°C pendant 2 heures.

On procède finalement au dépôt de platine en imprégnant à l'évaporateur rotatif 11,22 g de ce solide par une solution constituée par le mélange de 4,6 ml d'une solution d'acide chloroplatinique à 10 g/l de Pt et de 40 ml d'eau distillée.

Le solide est finalement séché à 120°C pendant la nuit et calciné ensuite à 480°C pendant 4 heures.

### Catalyseur E

Cet exemple illustre la préparation d'un catalyseur acide E selon l'invention, à base de zircone sulfatée massique pure.

On dissout 35 g de ZrO(NO₃)₂, 6H₂O dans 350 ml d'eau distillée, sous agitation.

On précipite le gel d'hydroxyde de zirconium par addition de 17 ml d'une solution d'ammoniaque à 28%, toujours sous agitation. Le pH final est de 8,5.

Après filtration et lavage jusqu'à pH 7 (redispersion dans 350 ml d'eau), on sèche le gel pendant une nuit à 120°C.

On obtient 13,77 g de solide.

On procède à la sulfatation en ajoutant 85 ml d'acide sulfurique 1 N, par contact statique pendant 15 minutes. On procède à l'essorage ensuite sur Buchner, puis au séchage pendant une nuit à 120°C.

La mise en forme est réalisée après broyage de l'ensemble du solide et malaxage avec 3,45 g d'alumine type Pural S B et 6,9 ml d'eau distillée dans une seringue-extrudeuse (2 mm de diamètre).

Après séchage à nouveau pendant une nuit à 120°C, on calcine les extrudés à 625°C pendant 2 heures.

La quantité de matière récupérée est de 12,5 g.

On procède finalement au dépôt de platine en imprégnant en statique 12,3 g de ce solide par une solution constituée par le mélange de 0,248 g d'une solution d'acide chloroplatinique à 25% de Pt et de 3,8 ml d'eau distillée (imprégnation à volume poreux).

Le solide est finalement séché à 120°C pendant une nuit et calciné ensuite à 480°C pendant 4 heures.

### Propriétés et activité des échantillons de catalyseur :

Le Tableau I ci-après illustre les propriétés des échantillons de catalyseur obtenus selon les méthodes de préparation détaillées ci-avant.

Dans ces cinq échantillons, la zircone sulfatée présente une structure cristalline de type quadratique. Cette structure a été déterminée par diffraction des rayon X.

Dans le tableau qui suit, S, Vp et Rp désignent respectivement la surface spécifique, le volume de pores et le rayon de pores moyen du catalyseur. Ces caractéristiques ont été déterminées au moyen de la méthode dite B.E.T. (Brunauer, Emmett, Teller), par adsorption d'azote, telle qu'elle est décrite dans l'ouvrage de S. Lowell et J.E. Shields, "Powder Surface Area and Porosity", Powder Technology Series (1984). La surface spécifique S est déduite de la transformée linéaire B.E.T. à cinq points (aux pressions relatives P/Po = 0,045 ; 0,08 ; 0,15 ; 0,25 et 0,33), le volume de pores Vp est déterminé d'après la quantité d'azote adsorbé à P/Po = 0,985 et le rayon de pores moyen Rp est calculé par la formule Rp = 2Vp/S.

Avant la détermination de ces caractéristiques, l'échantillon a été soumis à un prétraitement par dégazage sous vide primaire à 250°C pendant au moins 8 heures.

**TABLEAU I**

| Catalyseur | ZrO₂ (% en poids) | Al²O³ (% en poids) | S (m²/g) | Vp (cm³/g) | Rp (10⁻¹⁰m) | Teneur en soufre (%) |
|---|---|---|---|---|---|---|
| A | 17,6 | 82,4 | 151 | 0,34 | 55 | 2,8 |
| B | 71 | 29 | 158,1 | 0,32 | 41 | 3,4 |
| C | 50 | 50 | 151,4 | 0,37 | 49 | 3,6 |
| D | 62,5 | 37,5 | 152,5 | 0,25 | 33 | 3,6 |
| E | 80 | 20 | 140 | 0,16 | 23 | 1,9 |

Remarque: le catalyseur E est à base de zircone sulfatée massique pure, les 20% d'alumine correspondent au liant ajouté lors de l'étape de mise en forme du catalyseur solide.

Les résultats présentés ci-dessus montrent que les procédés de préparation mis au point par la Demanderesse permettent d'élaborer des catalyseurs à base de zircone sulfatée présentant des surfaces spécifiques particulièrement élevées, supérieures à ce qui a été réalisé jusqu'ici dans l'art antérieur. Grâce à de telles méthodes, il devient dès lors possible de contrôler la porosité de ces catalyseurs et de la modifier afin d'obtenir l'activité recherchée.

L'activité de ces échantillons a tout d'abord été déterminée dans la réaction d'isomérisation du normal-hexane, dans les conditions habituellement utilisées pour les catalyseurs chlorés (T=145°C, P = 30.10⁵Pa, rapport hydrogène/hydrocarbure H₂/HC = 3).Le tableau II ci-après présente les résultats obtenus. L'activité des échantillons est représentée par le pourcentage en poids du 2,2 diméthyl-butane (2,2-DMB) dans l'effluent d'isomérisation du normal-hexane. Différentes vitesses -spatiales (ou ppH, poids de charge par unité de poids de catalyseur et par heure) ont été utilisées: ppH = 2 ou 4 kg de charge.kg⁻¹ de catalyseur.h⁻¹.

**TABLEAU II :**

| isomérisation du normal-hexane | | |
|---|---|---|
| Catalyseur | Activité (%2, 2-DMB) | |
| | ppH=2 | ppH=4 |
| A | 29,9 | 21,2 |
| B | 31,4 | 27,9 |
| C | 31,9 | 28,2 |
| D | 29,6 | 22,1 |
| E | 26,4 | |

Ainsi, les catalyseurs conformes à l'invention présentent une excellente activité pour l'isomérisation des paraffines légères à basse température. Cette activité est proche de celle des catalyseurs traditionnels à base d'alumine chlorée.

De plus, les propriétés supplémentaires apportées par les catalyseurs selon l'invention, par rapport aux catalyseurs de l'art antérieur, sont considérables (stabilité accrue, facilité de manipulation, régénérabilité,...). Tout ceci rend leur utilisation particulièrement avantageuse dans les réactions faisant intervenir un catalyseur acide, voire superacide.

Il est à noter que l'activité des catalyseurs selon l'invention est également remarquable dans d'autres réactions, dont notamment l'hydroconversion de paraffines plus lourdes, linéaires ou peu ramifiées.

Ainsi, le catalyseur E a été testé pour l'hydroconversion du normal-dodécane d'une part et du normal-hexadécane d'autre part.

Pour chaque test catalytique, 7g de catalyseur sont chargés dans un réacteur dans des conditions anhydres (sous argon). Différentes conditions opératoires ont été utilisées, T représentant la température, P la pression, H₂/HC le rapport moléculaire hydrogène/hydrocarbure, pph le poids de charge par unité de poids de catalyseur et par heure.

Les résultats obtenus figurent dans les tableaux III et IV ci-après.

**Tableau III :**

| hydroconversion du n-dodécane (n-C12) | | | | | | | | |
|---|---|---|---|---|---|---|---|---|
| **T** **(°C)** | **P** **(10**^{**5**}**Pa)** | **H**_{**2**}**/HC** | **PPH** **h**^{**-1**} | **Conversion** **(%)** | **Rendement** **i-C12(%)** | **Rendement** **C5-C11(%)** | **Sélectivité** **i-C12(%)** | **Sélectivité** **C5-C11(%)** |
| 150 | 50 | 6 | 0,84 | 100 | 0 | 44,2 | 0 | 44,2 |
| 125 | 50 | 12 | 1,25 | 60 | 8 | 40,1 | 13,3 | 67,9 |
| 125 | 50 | 12 | 1,25 | 91,2 | 2,2 | 61 | 2,4 | 66,9 |
| 115 | 50 | 6 | 0,84 | 69,6 | 6,3 | 46,6 | 9,1 | 67 |
| 115 | 50 | 12 | 1,25 | 51,6 | 6,7 | 35,4 | 13 | 68,6 |
| 115 | 30 | 6 | 0,84 | 70,4 | 0,7 | 26,2 | 1 | 37,2 |

**Tableau IV :**

| hydroconversion du n-hexadécane (n-C16) | | | | | | | |
|---|---|---|---|---|---|---|---|
| **T** **(°C)** | **P** **(10**^{**5**}**Pa)** | **H**_{**2**}**/HC** | **PPH** **h**^{**-1**} | **Conversion** **(%)** | **Séléctivité** **i-C16(%)** | **Sélectivité** **C5-C11(%)** | **Sélectivité** **C12-C15(%)** |
| 115 | 50 | 3 | 1 | 100 | 0 | 71,7 | 0,3 |
| 115 | 50 | 3 | 2 | 57,4 | 8,3 | 59,5 | 6,6 |
| 115 | 50 | 6 | 2 | 53,2 | 9,1 | 54,1 | 7,1 |
| 115 | 50 | 6 | 1 | 78,6 | 5,7 | 73,4 | 3,7 |
| 115 | 50 | 1,22 | 1 | 100 | 0 | 85,6 | 0,7 |
| 125 | 50 | 6 | 2 | 56 | 6,5 | 72,3 | 5,4 |
| 125 | 50 | 3 | 2 | 69,8 | 6,1 | 71,7 | 3,6 |

Comme le montrent les tableaux ci-dessus, la conversion est importante dès 115°C, ce qui illustre la bonne activité du catalyseur à basse température.

Deux réactions se produisent essentiellement :
- hydroisomérisation du normal-dodécane en iso-dodécane(n-C12→i-C12), ou du normal hexadécane en iso-hexadécane (n-C16→i-C16) ;
- hydrocraquage du normal-dodécane ou du normal-héxadécane en hydracarbures plus légers, avec à chaque fois une excellente sélectivité en faveur d'hydrocarbures intermédiaires contenant de 5 à 11 atomes de carbone (plus de 85% dans certaines conditions); il s'agit en grande partie de pentanes et d'hexanes (C5 et C6)ramifiés, qui sont des produits recherchés car valorisables dans les essences en raison de leur indice d'octane élevé : ainsi, la fraction C5-C6 issue de l'hydroconversion du normal-hexadécane à 115°C,50.10⁵ Pa, H₂/HC=6 et pph=1 (Tableau IV, ligne 4, en gras) présente un indice d'octane recherche, ou RON, égal à 88.

Le catalyseur selon l'invention est donc particulièrement performant pour l'hydroconversion de paraffines peu ramifiées à plus de 7 atomes de carbone, telles que les paraffines issues d'une synthèse de type Fischer-Tropsch. Il s'avère remarquablement sélectif en ce qui concerne l'hydrocraquage de ces paraffines en hydrocarbures intermédiaires valorisables.

## Revendications

1. Catalyseur acide solide, contenant une quantité substantielle de zircone sulfatée supportée ou massique, au moins un autre oxyde minéral réfractaire, et au moins un métal de transition hydrogénant, **caractérisé en ce que** ladite zircone sulfatée est sous forme cristallisée et **en ce qu'**il présente une surface spécifique supérieure ou égale à 135 m²/g, un volume de pores supérieur ou égal à 0,16 cm³/g et un rayon de pores moyen supérieur ou égal à 20 À (20.10⁻¹⁰m).

2. Catalyseur acide selon la revendication 1, **caractérisé en ce que** sa surface spécifique est supérieure ou égale à 150 m² /g, son volume de pores supérieur ou égal à 0,2 cm³ /g, et son rayon de pores moyen supérieur ou égal à 30 Å (30.10⁻¹⁰m).

3. Catalyseur acide selon l'une quelconque des revendications précédentes, **caractérisé en ce que** ladite zircone sulfatée cristallisée présente une structure cristalline de type quadratique ou monoclinique.

4. Catalyseur acide selon l'une quelconque des revendications précédentes, **caractérisé en ce qu'**il présente une densité apparente de remplissage comprise entre 0,5 et 3.

5. Catalyseur acide selon l'une quelconque des revendications précédentes, **caractérisé en ce que** ladite zircone est partiellement ou totalement sulfatée, la teneur en soufre sous forme de sulfate étant préférentiellement comprise entre 1% et 10% en poids par rapport au poids de zircone, et plus préférentiellement entre 1% et 5% en poids.

6. Catalyseur acide selon l'une quelconque des revendications précédentes, **caractérisé en ce que** ladite zircone sulfatée cristallisée est sous forme supportée, c'est-à-dire déposée sur tout type de support usuellement employé pour les catalyseurs industriels, comme par exemple les alumines, les silices, les silice-alumines, les silicalites, les alumino-silicates, les magnésies, les zéolithes, les charbons actifs, les oxydes de gallium, de titane, de thorium, de bore, les argiles et tout mélange de ces supports.

7. Catalyseur acide selon la revendication 6, **caractérisé en ce qu'**il comprend entre 50% et 95% en poids de support classique, sur lequel est déposé de 5% à 50% en poids de zircone sulfatée.

8. Catalyseur acide selon l'une quelconque des revendications 1 à 5, **caractérisé en ce que** ladite zircone sulfatée cristallisée est sous forme massique, c'est-à-dire que le catalyseur comprend des cristaux de zircone dans sa matrice, en mélange avec un agent liant et éventuellement un agent structurant, qui peut être tout oxyde minéral réfractaire habituellement employé dans l'industrie.

9. Catalyseur acide selon la revendication 8, **caractérisé en ce que** ledit agent structurant est choisi dans le groupe constitué par les alumines, les silices, les silice-alumines, les alumino-silicates, les argiles et les mélanges de ces composés.

10. Catalyseur acide selon l'une des revendications 8 et 9, **caractérisé en ce qu'**il comprend de 0,5% à 100% en poids de zircone sulfatée, et préférentiellement de 20% à 80% en poids.

11. Catalyseur acide selon l'une quelconque des revendications précédentes, **caractérisé en ce que** le métal de transition hydrogénant est un élément du groupe VIII de la Classification Périodique des Eléments et est de préférence le platine.

12. Procédé de préparation d'un catalyseur selon l'une des revendications 6 et 7, **caractérisé en ce qu'**il comprend les étapes suivantes :
- dépôt de zircone hydratée sur le support catalytique,
- calcination du solide,
- sulfatation du solide,
- dépôt d'un métal de transition hydrogénant,
- calcination finale du solide, l'étape de dépôt d'un métal de transition hydrogénant sur le support catalytique pouvant être effectuée avant le dépôt de zircone ou à un autre moment de la préparation, mais avant la calcination finale.

13. Procédé selon la revendication 12, **caractérisé en ce que** l'étape de dépôt de zircone hydratée sur le support catalytique est effectuée par imprégnation dudit support au moyen d'une solution d'un sel de zirconium suivie de séchage du solide ainsi obtenu.

14. Procédé de préparation catalyseur selon l'une des revendications 8 à 10, **caractérisé en ce qu'**il comprend les étapes suivantes :
- addition d'une solution basique à une solution d'un sel de zirconium, de manière à provoquer une précipitation de zircone hydratée,
- addition d'une solution d'un sel précurseur de l'oxyde minéral réfractaire structurant,
- addition d'une solution basique, de manière à provoquer une précipitation de l'oxyde minéral réfractaire structurant,
- lavage puis séchage du produit obtenu,
- mise en forme du solide,
- sulfatation du solide,
- dépôt du métal de transition hydrogénant,
- calcination finale, la précipitation de la zircone pouvant être effectuée avant ou après celle de l'oxyde minéral réfractaire structurant ; les étapes de dépôt du métal de transition hydrogénant et de mise en forme pouvant être effectuées avant ou après la sulfatation, mais avant la calcination finale.

15. Procédé de préparation d'un catalyseur selon l'une des revendications 8 à 10, **caractérisé en ce qu'**il comprend les étapes suivantes :
- addition d'une solution basique à une solution d'un sel de zirconium et d'un sel précurseur de l'oxyde minéral réfractaire structurant, de manière à provoquer une coprécipitation de zircone et de l'oxyde minéral réfractaire structurant,
- lavage, séchage du précipité obtenu,
- mise en forme du solide,
- sulfatation du solide,
- dépôt du métal de transition hydrogénant,
- calcination finale,
les étapes de dépôt du métal de transition hydrogénant et de mise en forme pouvant être effectuées avant ou après la sulfatation, mais avant la calcination finale.

16. Procédé de préparation d'un catalyseur selon l'une des revendications 8 à 10, **caractérisé en ce qu'**il comprend les étapes suivantes :
- addition d'une solution basique à une solution d'un sel de zirconium, de manière à provoquer une précipitation de zircone hydratée,
- lavage puis séchage du précipité obtenu,
- sulfatation du solide,
- mise en forme du solide, par ajout à la poudre de catalyseur d'un liant (tel qu'un xérogel d'alumine ou tout autre liant industriel), malaxage du mélange ainsi obtenu, puis mise en forme proprement dite par extrusion, « oil drop», méthode du drageoir ou toute autre méthode connue de mise en forme de catalyseurs industriels, et enfin calcination,
- dépôt du métal de transition hydrogénant,
- calcination finale,
l'étape de dépôt du métal de transition hydrogénant pouvant être effectuée avant ou après la sulfatation, mais avant la calcination finale.

17. Procédé selon la revendication 14 ou la revendication 15, **caractérisé en ce que** ledit oxyde minéral structurant est de l'alumine et ledit sel précurseur est choisi dans le groupe constitué par les nitrate, chlorure et sulfate d'aluminium.

18. Procédé selon l'une quelconque des revendications 12 à 17, **caractérisé en ce que** le sel de zirconium est choisi dans le groupe constitué par les nitrate, chlorure, acétate, formiate, oxalate de zirconium et de zirconyle ainsi que les propylate et butylate de zirconium.

19. Procédé selon 1 une quelconque des revendications 12 à 18 **caractérisé en ce que** l'étape de sulfatation du catalyseur est réalisée par imprégnation du solide au moyen d'un agent sulfatant, puis séchage et calcination du solide, l'agent sulfatant pouvant être de l'acide sulfurique pur ou en solution, une solution aqueuse de sulfate d'ammonium, ou tout autre précurseur d'ions sulfate.

20. Procédé selon l'une quelconque des revendications 12 à 19, **caractérisé en ce que** l'étape de dépôt du métal de transition hydrogénant est réalisée par imprégnation du solide au moyen d'une solution d'un composé de ce métal de transition hydrogénant, suivie d'une étape de séchage.

21. Procédé selon la revendication 20, **caractérisé en ce que** le métal de transition hydrogénant est le platine, et **en ce que** l'étape d'imprégnation est effectuée au moyen d'une solution d'un composé du platine pouvant être choisi dans le groupe constitué par l'acide chloroplatinique et les composés complexes du platine.

22. Procédé selon l'une quelconque des revendications 12 à 21, **caractérisé en ce que** la première calcination effectuée a lieu à une température supérieure ou égale à 550°C.

23. Utilisation d'un catalyseur acide selon l'une des revendications 1 à 11 ou obtenu par le procédé selon l'une des revendications 12 à 22 dans une réaction chimique de transformation des hydrocarbures nécessitant l'emploi d'un catalyseur acide, voire superacide.

24. Utilisation d'un catalyseur acide selon l'une des revendications 1 à 11 ou obtenu par le procédé selon l'une des revendications 12 à 22 dans une réaction d'isomérisation d'hydrocarbures, dont l'isomérisation de paraffines, l'isomérisation d'oléfines, l'isomérisation de composés cycliques et aromatiques.

25. Utilisation d'un catalyseur acide selon l'une des revendications 1 à 11 ou obtenu par le procédé selon l'une des revendications 12 à 22 dans une réaction d'hydrocraquage et /ou d'hydroisomérisation de paraffines à plus de 7 atomes de carbone, linéaires- ou peu ramifiées, telles que par exemple des paraffines issues d'une synthèse de type Fischer-Tropsch.

26. Utilisation selon la revendication 25, dans laquelle la température de réaction est comprise entre 20 et 200°C, la pression entre 5.10⁵ et 100.10⁵Pa et le rapport moléculaire hydrogène/hydrocarbures à convertir H₂/HC est compris entre 1 et 20.

27. Utilisation d'un catalyseur acide selon l'une des revendications 1 à 11 ou obtenu par le procédé selon l'une des revendications 12 à 22 dans une réaction d'alkylation, une réaction d'oligomérisation ou une réaction de déshydratation d'hydrocarbures.

## Patentansprüche

1. Saurer Feststoffkatalysator mit einer beträchtlichen Menge an aufgelagertem oder massivem sulfatiertem Zirkonoxid, mit mindestens einem weiteren feuerfesten mineralischen Oxid und mit mindestens einem hydrierenden Übergangsmetall, **dadurch gekennzeichnet, dass** das sulfatierte Zirkonoxid von kristallisierter Beschaffenheit ist und dass der Katalysator eine spezifische Oberfläche gleich 135 m²/g oder mehr, ein Porenvolumen gleich 0.16 cm³/g oder darüber und einen mittleren Porenradius gleich 20 A (20.10⁻¹⁰m) oder grösser aufweist.

2. Saurer Katalysator nach Anspruch 1, **dadurch gekennzeichnet, dass** seine spezifische Oberfläche gleich 150 m²/g oder grösser ist, dass sein Porenvolumen mehr als 0.2 cm³/g ausmacht oder gleich diesem Wert ist und dass der mittlere Porenradius gleich 30 A (30.10⁻¹⁰m) oder grösser ist.

3. Saurer Katalysator nach irgendeinem der vorstehenden Ansprüche, **dadurch gekennzeichnet, dass** das kristallisierte sulfatierte Zirkonoxid eine -kristalline Struktur von quadratischer oder monokliner Form besitzt.

4. Saurer Katalysator nach irgendeinem der vorstehenden Ansprüche, **dadurch gekennzeichnet, dass** er ein Schüttvolumen zwischen 0.5 und 3 aufweist.

5. Saurer Katalysator nach irgendeinem der vorstehenden Ansprüche, **dadurch gekennzeichnet, dass** das Zirkonoxid teilweise oder vollständig sulfatiert ist, wobei der Gehalt an Schwefel in Form von Sulfat bevorzugt zwischen 1 Gew.-% und 10 Gew.-% relativ zum Zirkonoxidgewicht und insbesondere zwischen 1 Gew.-% und 5 Gew.-% liegt.

6. Saurer Katalysator nach irgendeinem der vorstehenden Ansprüche, **dadurch gekennzeichnet, dass** das kristallierte sulfatierte Zirkonoxid aufgelagert ist, d.h. auf jede Art von allgemein für industrielle Katalysatoren verwendete Träger wie zum Beispiel Tonerden, Kieselerden, Siliziumoxidtonerden, Silikaverbindungen, Aluminosilikate, Magnesiumoxide, Zeolithe, Aktivkohlen, Gallium-, Titan-Thorium- und Boroxide, Töpfererden und jede Mischung aus diesen Trägern aufgebracht wird.

7. Saurer Katalysator nach Anspruch 6, **dadurch gekennzeichnet, dass** er zwischen 50 Gew.-% und 95 Gew.-% klassisches Trägermaterial umfasst, auf dem zwischen 5 Gew.-% und 50 Gew.-% sulfatiertes Zirkonoxid aufgebracht werden.

8. Saurer Katalysator nach irgendeinem der Ansprüche 1 bis 5, **dadurch gekennzeichnet, dass** das kristallisierte sulfatierte Zirkonoxid von massiver Beschaffenheit ist, d.h. der Katalysator Zirkonoxidkristalle in seiner Matrix als Gemisch mit einem Bindemittel und ggf. einem Strukturierungsmittel umfasst, bei dem es sich um jede Art von feuerfestem mineralischem Oxid handeln kann, wie diese in der Industrie verwendet werden.

9. Saurer Katalysator nach Anspruch 8, **dadurch gekennzeichnet, dass** das Strukturierungsmittel aus der von Tonerden, Kieselerden, Aluminosilikaten, Töpfererden und Gemischen dieser Verbindungen gebildeten Gruppe ausgewählt wird.

10. Saurer Katalysator nach einem der Ansprüche 8 und 9, **dadurch gekennzeichnet, dass** er zwischen 0.5 Gew.-% und 100 Gew.-% und bevorzugt zwischen 20 Gew.-% und 80 Gew.-% sulfatiertes Zirkonoxid umfasst.

11. Saurer Katalysator nach irgendeinem der vorstehenden Ansprüche, **dadurch gekennzeichnet, dass** es sich bei dem hydrierenden Übergangsmetall um ein Element der Gruppe VIII des klassischen Periodensystems der Elements und bevorzugt um Platin handelt.

12. Verfahren zur Herstellung eines Katalysators nach einem der Ansprüche 5 und 8, **dadurch gekennzeichnet, dass** es die folgenden Schritte umfasst:
- Aufbringen von hydriertem Zirkonoxid auf den katalytischen Träger,
- Kalzinieren des Feststoffs,
- Sulfatieren des Feststoffs,
- Aufbringen eines hydrierenden Übergangsmetalls,
- und abschliessenden Kalzinieren des Feststoffs,
wobei der Schritt des Aufbringens eines hydrierenden Übergangsmetalls auf den katalytischen Träger vor dem Aufbringen des Zirkonoxids oder zu irgendeinem anderen Moment der Herstellung ausgeführt werden kann, in jedem Fall jedoch vor dem abschliessenden Kalzinieren auszuführen ist.

13. Verfahren nach Anspruch 12, **dadurch gekennzeichnet, dass** der Schritt der Aufbringung des hydrierten Zirkonoxids auf dem katalytischen Träger durch Imprägnierung dieses Trägers mit einer Zirkonsalzlösung mit anschliessendem Trocknen des so erhaltenen Feststoffs ausgeführt wird.

14. Verfahren zur Katalysatorherstellung nach irgendeinem der Ansprüche 8 bis 10, **dadurch gekennzeichnet, dass** es die folgenden Schritte umfasst:
- Zugeben einer basischen Lösung zu einer Lösung aus einem Zirkonsalz dergestalt, dass eine Ausfällung von hydratiertem Zirkonoxid herbeigeführt wird,
- Zugeben einer Lösung aus einem Zwischensalz des der Strukturierung dienenden feuerfesten Mineraloxids,
- Zugeben einer basischen Lösung dergestalt, dass eine Ausfällung des der Strukturierung dienenden feuerfesten Mineraloxids erfolgt,
- Waschen und anschliessendes Trocknen des erhaltenen Produkts,
- Formgebung des Feststoffs,
- Sulfatieren des Feststoffs,
- Aufbringen des hydrierenden Übergangsmetalls,
- und abschliessenden Kalzinieren,
wobei das Ausfällen des Zirkonoxids vor oder nach dem Ausfällen des der Strukturierung dienenden feuerfesten Mineraloxids möglich ist und wobei die Schritte des Aufbringens des hydrierenden Ubergangsmetalls und der Formgebung vor oder nach dem Sulfatieren ausgeführt werden können, in jedem Fall jedoch vor dem abschliessenden Kalzinieren auszuführen sind.

15. Verfahren zur Herstellung eines Katalysators nach irgendeinem der Ansprüche 8 bis 10, **dadurch gekennzeichnet, dass** es die folgenden Schritte umfasst:
- Zugeben einer basischen Lösung zu einer Lösung aus einem Zirkonsalz undeinem Zwischensalz des der Strukturierung dienenden feuerfesten Mineraloxids dergestalt, dass eine Kopräzipitation des Zirkonoxids und des der Strukturierung dienenden feuerfesten Mineraloxids herbeigeführt wird,
- Waschen, Trocknen des erhaltenen Präzipitats,
- Formgebung des Feststoffs,
- Sulfatieren des Feststoffs,
- Aufbringen des hydrierenden Übergangsmetalls,
- und abschliessenden Kalzinieren,
wobei die Schritte des Aufbringens des hydrierenden Übergangsmetalls und der Formgebung vor oder nach dem Sulfatieren ausgeführt werden können, in jedem Fall jedoch vor dem abschliessenden Kalzinieren auszuführen sind.

16. Verfahren.zur Herstellung eines Katalysators nach irgendeinem der Ansprüche 8 bis 10, **dadurch gekennzeichnet, dass** es die folgenden Schritte umfasst:
- Zugeben einer basischen Lösung zu einer Lösung aus einem Zirkonsalz dergestalt, dass eine Ausfällung von hydratiertem Zirkonoxid herbeigeführt wird,
- Waschen und anschliessendes Trocknen des erhaltenen Präzipitats,
- Sulfatieren des Feststoffs,
- Formgebung des Feststoffs durch Zugabe eines Bindemittels (wie zum Beispiel ein Tonerdexerogel oder jedes andere industrielle Bindemittel) zum Katalysatorpulver, Kneten des auf diese Weise erhaltenen Gemisches,_ durch die eigentliche Formgebung durch Extrusion, «oil drop», Baggermethode oder jede andere bekannte Methode für die Formgebung industrieller Katalysatoren und schliesslich durch Kalzinieren,
- Aufbringen des hydrierenden Übergangsmetalls,
- abschliessendes Kalzinieren,
wobei der Schritt des Aufbringens des hydrierenden Ubergangsmetalls vor oder nach dem Sulfatieren ausgeführt werden kann, in jedem Fall jedoch vor dem abschliessenden Kalzinieren auszuführen ist.

17. Verfahren nach Anspruch 14 oder Anspruch 15, **dadurch gekennzeichnet, dass** es sich bei dem der Strukturierung dienenden mineralischen Oxid um Tonerde handelt und dass das Zwischensalz aus der aus Nitrat, Chlorid und Aluminiumsulfat bestehenden Gruppe stammt.

18. Verfahren nach irgendeinem der Ansprüche 12 bis 17, **dadurch gekennzeichnet, dass** das Zirkonsalz aus der aus Nitrat, Chlorid, Acetat, Formiat, Zirkon- und Zirkonyloxalat sowie Zirkonpropylat und -butylat bestehenden Gruppe ausgewählt wird.

19. Verfahren nach irgendeinem der Ansprüche 12 bis 18, **dadurch gekennzeichnet, dass** der Schritt der Sulfatierung des Katalysators durch Imprägnierung mittels eines Sulfatierungsmittels und anschliessendes Trocken und Kalzinieren des Feststoffes erfolgt, wobei es sich beim Sulfatierungsmittel um reine oder gelöste Schwefelsäure, eine wässerige Lösung aus Natriumsulfat oder jedes andere Zwischenmittel aus Sulfationen handeln kann.

20. Verfahren nach irgendeinem der Ansprüche 12 bis 19, **dadurch gekennzeichnet, dass** der Schritt des Aufbringens des hydrierenden Übergangsmetalls durch Imprägnierung des Feststoffs mit einer Lösung aus einer Verbindung dieses hydrierenden Übergangsmetalls und anschliessendes Trocknen ausgeführt wird.

21. Verfahren nach Anspruch 20, **dadurch gekennzeichnet, dass** es sich bei dem hydrierenden Übergangsmetall um Platin handelt und dass der Schritt der Imprägnierung mittels einer Lösung aus einer Platinverbindung erfolgt, die aus der aus Chlorplatinsäure und den komplexen Platinverbindungen bestehenden Gruppe stammt.

22. Verfahren nach irgendeinem der Ansprüche 12 bis 21, **dadurch gekennzeichnet, dass** die erste Kalzinierung bei einer Temperatur von 550°C oder höher stattfindet.

23. Verwendung eines sauren Katalysators nach irgendeinem der Ansprüche 1 bis 11 oder eines nach dem Verfahren gemäss einem der Ansprüche 12 bis 22 durch eine chemische Reaktion zur Umwandlung von Kohlenwasserstoffen hergestellten sauren Katalysators, welche die Verwendung eines sauren oder sogar supersauren Katalysators oder erforderlich macht.

24. Verwendung eines sauren Katalysators nach irgendeinem der Ansprüche 1 bis 11 oder eines nach dem Verfahren gemäss einem der Ansprüche 12 bis 22 durch eine Reaktion zur Isomerisierung von Kohlenwasserstoffen und die Isomerisierung von Paraffinen, die Isomerisierung von Olefinen sowie die Isomerisierung von zyklischen und aromatichen Verbindungen hergestellten sauren Katalysators.

25. Verwendung eines sauren Katalysators nach irgendeinem der Ansprüche 1 bis 11 oder eines nach dem Verfahren gemäss einem der Ansprüche 12 bis 22 durch eine chemische Reaktion zum Hydrokracken bzw. zur Hydroisomerisierung von Paraffinen mit mehr als 7 linearen oder leicht verzweigten Kohlenstoffatomen wie zum Beispiel von aus einer Synthese ähnlich der nach Fischer-Tropsch gebildeten Paraffinen hergestellten sauren Katalysators.

26. Verwendung nach Anspruch 25, bei welcher die Reaktionstemperatur zwischen 20 und 200°C, der Druck zwischen 5.10⁵ und 100.10⁵ Pa und das molekulare Verhältnis von umzuwandelndem Wasserstoff/ Kohlenwasserstoffen H2/HC zwischen 1 und 20 liegt.

27. Verwendung eines sauren Katalysators nach irgendeinem der Ansprüche 1 bis 11 oder eines nach dem Verfahren gemäss einem der Ansprüche 12 bis 22 durch eine Reaktion zur Alkylierung, eine Reaktion zur Oligomerisierung oder eine Reaktion zur Dehydratisierung von Kohlenwasserstoffen hergestellten sauren Katalysators.

## Claims

1. A solid acid catalyst, containing a substantial quantity of sulphated zirconia which is supported thereon or incorporated therein, at least one other refractory mineral oxide and at least one hydrogenating transition metal, **characterised in that** said sulphated zirconia is in crystalline form and **in that** it has a specific surface of at least 135 m²/g, a pore volume of at least 0.16 cm³/g and an average pore radius of at least 20 Å(20.10⁻¹⁰m).

2. An acid catalyst according to claim 1, **characterised in that** its specific surface is at least 150 m²/g, its pore volume is at least 0.2 cm³/g and its average pore radius is at least 30 Å (30.10⁻¹⁰m).

3. An acid catalyst according to any one of the preceding claims, **characterised in that** said sulphated crystallised zirconia has a crystalline structure of tetragonal or monoclinic type.

4. An acid catalyst according to any one of the preceding claims, **characterised in that** it has an apparent filling density of between 0.5 and 3.

5. An acid catalyst according to any one of the preceding claims, **characterised in that** said zirconia is partly or completely sulphated, the sulphur content in the form of sulphate being preferably between 1 % and 10 % by weight in relation to the weight of zirconia and, more preferably, between 1 % and 5 % by weight.

6. An acid catalyst according to any one of the preceding claims, **characterised in that** the said crystallised sulphated zirconia is in supported form, i.e. deposited on any type of support commonly used for industrial catalysts, for example the aluminas, the silicas, the silica-aluminas, the silicalites, the alumino-silicates, the magnesias, the zeolites, the activated carbons, the oxides of gallium, titanium, thorium, boron, the clays and any mixture of these supports.

7. An acid catalyst according to claim 6, **characterised in that** it comprises between 50 % and 95 % by weight of conventional support, on which is deposited 5 % to 50 % by weight of sulphated zirconia.

8. An acid catalyst according to any one of claims 1 to 5, **characterised in that** said crystallised sulphated zirconia is incorporated therein, i.e. the catalyst comprises zirconia crystals in its matrix, mixed with a binder and optionally a structuring agent which may be any refractory mineral oxide commonly used in the industry.

9. An acid catalyst according to claim 8, **characterised in that** said structuring agent is selected from the group comprising the aluminas, the silicas, the silica-aluminas, the alumino-silicates, the clays and mixtures of these compounds.

10. An acid catalyst according to either one of claims 8 and 9, **characterised in that** it comprises 0.5 % to 100 % by weight of sulphated zirconia and, preferably, 20 % to 80 % by weight.

11. An acid catalyst according to any one of the preceding claims, **characterised in that** the hydrogenating transition metal is an element of group VIII of the Periodic Table of elements and, preferably, is platinum.

12. A method of preparing a catalyst according to either one of claims 6 and 7, **characterised in that** it comprises the following steps:
- depositing hydrated zirconia on the catalytic support,
- calcining the solid,
- sulphating the solid,
- depositing a hydrogenating transition metal,
- final calcining of the solid, it being possible to carry out the step of depositing a hydrogenating transition metal on the catalytic support before the deposition of zirconia or at any other moment of the preparation but before the final calcination.

13. A method according to claim 12, **characterised in that** the step of depositing hydrated zirconia on the catalytic support is effected by impregnating said support by means of a solution of a zirconium salt following by drying the solid thus obtained.

14. A method of preparing a catalyst according to any one of claims 8 to 10, **characterised in that** it comprises the following steps:
- adding a basic solution to a solution of a zirconium salt so as to bring about the precipitation of hydrated zirconia,
- adding a solution of a precursor salt of the structuring refractory mineral oxide,
- adding a basic solution so as to bring about the precipitation of the structuring refractory mineral oxide,
- washing and then drying the resultant product,
- moulding the solid,
- sulphating the solid,
- depositing the hydrogenating transition metal,
- final calcining, it being possible to carry out the precipitation of the zirconia before or after that of the structuring refractory mineral oxide; it being possible to carry out the steps of depositing the hydrogenating transition metal and moulding before or after the sulphating step but before the final calcination.

15. A method of preparing a catalyst according to any one of claims 8 to 10, **characterised in that** it comprises the following steps:
- adding a basic solution to a solution of a zirconium salt and of a precursor salt of the structuring refractory mineral oxide so as to bring about the co-precipitation of zirconia and of structuring refractory mineral oxide,
- washing and drying the resultant precipitate,
- moulding the solid,
- sulphating the solid,
- depositing the hydrogenating transition metal,
- final calcining,
it being possible to carry out the steps of depositing the hydrogenating transition metal and moulding before or after the sulphating step but before the final calcination.

16. A method of preparing a catalyst according to any one of claims 8 to 10, **characterised in that** it comprises the following steps:
- adding a basic solution to a solution of a zirconium salt so as to bring about the precipitation of hydrated zirconia,
- washing then drying the resultant precipitate,
- sulphating the solid,
- moulding the solid by adding to the catalyst powder a binder (such as a xerogel of alumina or any other industrial binder), kneading the resultant mixture, then moulding proper by extrusion, "oil drop", groove method or any other known method for moulding industrial catalysts and, finally, calcination,
- depositing the hydrogenating transition metal,
- final calcination,
it being possible to carry out the step of depositing the hydrogenating transition metal before or after sulphating but before the final calcination.

17. A method according to claim 14 or claim 15, **characterised in that** said structuring mineral oxide is alumina and said precursor salt is selected from the group comprising aluminium nitrate, chloride and sulphate.

18. A method according to any one of claims 12 to 17, **characterised in that** the zirconium salt is selected from the group comprising zirconium and zirconyl nitrate, chloride, acetate, formiate, oxalate, as well as zirconium propylate and butylate.

19. A method according to any one of claims 12 to 18, **characterised in that** the step of sulphating the catalyst is carried out by impregnating the solid with a sulphating agent, then drying and calcining the solid, it being possible for the sulphating agent to be pure sulphuric acid or in solution, an aqueous solution of ammonium sulphate or any other precursor of sulphate ions.

20. A method according to any one of claims 12 to 19, **characterised in that** the step of depositing the hydrogenating transition metal is carried out by impregnating the solid by means of a solution of a compound of this hydrogenating transition metal, followed by a drying step.

21. A method according to claim 20, **characterised in that** the hydrogenating transition metal is platinum, and **in that** the impregnating step is carried out by means of a solution of a platinum compound which can be selected from the group comprising chloroplatinic acid and the complex compounds of platinum.

22. A method according to any one of claims 12 to 21, **characterised in that** the first calcination carried out takes place at a temperature of at least 550°C.

23. Use of an acid catalyst according to any one of claims 1 to 11 or obtained by the method according to any one of claims 12 to 22 in a chemical reaction for the conversion of hydrocarbons necessitating the use of an acid catalyst, even a super acid.

24. Use of an acid catalyst according to any one of claims 1 to 11 or obtained by the method according to any one of claims 12 to 22 in a reaction for the isomerisation of hydrocarbons, including the isomerisation of paraffins, the isomerisation of olefins and the isomerisation of cyclic and aromatic compounds.

25. Use of an acid catalyst according to any one of claims 1 to 11 or obtained by the method according to any one of claims 12 to 22 in a reaction for hydrocracking and/or hydroisomerisation of paraffins having more than 7 carbon atoms, said paraffins either being linear-chained or slightly branched, for example paraffins resulting from synthesis of the Fischer-Tropsch type.

26. Use according to claim 25, in which the reaction temperature is between 20 and 200°C, the pressure is between 5.10⁵ and 100.10⁵Pa and the hydrogen/hydrocarbon molecular ratio for converting H₂/HC is between 1 and 20.

27. Use of an acid catalyst according to any one of claims 1 to 11 or obtained by the method according to any one of claims 12 to 22 in an alkylation reaction, an oligomerisation reaction or a hydrocarbon dehydration reaction.
